# FASCICULE DE BREVET EUROPEEN

(11) **EP 0 737 021 B1**
(45) Date de publication et mention de la délivrance du brevet: **01.08.2001**
(21) Numéro de dépôt: 96400738.9
(22) Date de dépôt: 04.04.1996
(51) Int. Cl.: H04Q 11/04, H04J 3/06

(54) **Procédé et dispositif de communication entre une pluralité de terminaux, compatible avec la norme ARINC 629**
Methode und Apparat für Kommunikation zwischen mehreren mit dem ARINC 629 Standard kompatiblen Endstellen
Method and apparatus for communication among a plurality of terminals, compatible with the ARINC 629 standard

(30) Priorité: 07.04.1995 FR 9504301
(43) Date de publication de la demande: 09.10.1996
(73) Titulaire: SEXTANT AVIONIQUE, 78141 Velizy Villacoublay (FR)
(72) Inventeur: Sannino, Christian, 78125 Vieille Eglise en Yvelines (FR)
(74) Mandataire: de Saint-Palais, Arnaud Marie

(56) Documents cités:
- COMPUTER NETWORKS AND ISDN SYSTEMS, vol. 24, no. 4, 15 Mai 1992, pages 279-309, XP000264210 BOUDEC J Y LE: "THE ASYNCHRONOUS TRANSFER MODE: A TUTORIAL"
- SCIENTIFIC HONEYWELLER, vol. 11, no. 1, 1 Janvier 1991, pages 57-70, XP000289742 HOYME K ET AL: "ARINC 629 AND SAFEBUS*: DATA BUSES FOR COMMERCIAL AIRCRAFT"

## Description

La présente invention concerne procédé et un dispositif de communication compatible avec la norme aéronautique ARINC 629.

Elle s'applique notamment, mais non exclusivement, à l'établissement de liens de communication entre une pluralité de terminaux installés à bord d'un aérodyne et interconnectés par un bus électrique ou optique.

La norme ARINC 629 telle que définie notamment dans le document SCIENTIFIC HONEYWELLER, vol. 11 N° 1, 1^{er} janvier 1991, pages 57-70, spécifie un algorithme utilisé par chaque terminal pour accéder au bus, et un format de message pour la transmission des informations par le bus, chaque message comprenant une zone de données précédée d'un en-tête permettant d'identifier la nature et le contenu des informations regroupées dans la zone de données de taille variable fonction du volume de données à transmettre.

Selon cette norme, la bande passante totale disponible qui est limitée à 2 Mbits/s, est partagée par tous les terminaux raccordés au bus, si bien que plus le nombre de terminaux à raccorder au bus est élevé, plus la bande passante moyenne affectée à chaque terminal est réduite.

Pour augmenter le débit d'informations, on a envisagé d'interconnecter les terminaux par plusieurs bus ARINC 629. Cependant, cette solution nécessite la réalisation d'interfaces de couplage entre chaque terminal et chaque bus, capables d'accéder simultanément aux bus en réception, et en émission d'appliquer un algorithme de sélection du bus sur lequel émettre le message. Une telle interface présente donc une complexité qui augmente avec le nombre de bus utilisés. Par conséquent, son coût est plus important, et ce d'autant plus qu'il faut le multiplier par le nombre de terminaux à interconnecter.

Par ailleurs, il existe une technique de communication asynchrone d'informations numériques par réseau commuté appelée ATM (Asynchronous Tranfer Mode), basée sur la commutation d'unités d'information appelées cellules, de taille fixe. Selon cette technique qui est exposée dans le document COMPUTER NETWORKS AND ISDN SYSTEMS, Vol. 24 n°4, 15 mai 1992, pages 279-309, le flux de cellules issu d'un terminal, destiné à un ou plusieurs terminaux constitue une connexion logique appelée "canal virtuel". Chaque cellule contient un en-tête dans lequel figure un numéro de canal virtuel, et un champ d'information, chaque cellule étant émise par multiplexage temporel sur les liaisons de transmission. Pour cela, le réseau comprend des commutateurs de cellules dont la fonction principale est de distribuer les cellules qu'ils reçoivent vers leurs destinataires, et donc qui assurent l'établissement des "canaux virtuels".

Les cellules présentent un format unique, ce qui autorise une réalisation matérielle, donc très rapide, du commutateur de cellules.

La présente invention a pour but d'appliquer la technique ATM pour assurer des communications conformes à la norme ARINC 629 entre une pluralité de terminaux.

A cet effet, elle propose un procédé de transfert de données numériques entre une pluralité de terminaux émettant et/ou recevant des trames ARINC 629.

Ce procédé est caractérisé en ce qu'il comprend la connexion de chaque terminal à un dispositif de commutation du type de ceux utilisés pour commuter les liaisons ATM par un bus respectif de type multi-émetteur, multi-récepteur, multiplexé, chaque bus étant relié à un seul terminal et au dispositif de commutation qui assure sélectivement la communication entre lesdits bus, ledit procédé comprenant en outre, lors de l'émission de données numériques par un terminal vers au moins un terminal destinataire :
- la conformation des données numériques en au moins un message de longueur fixe prédéfinie, dans lequel les données numériques sont associées à un en-tête comprenant un code d'identification du message,
- l'émission dudit message par le terminal sur le bus le reliant au dispositif de commutation,
- la réception du message par le dispositif de commutation, la lecture du code d'identification du message, et la détermination, à l'aide du code d'identification, des terminaux destinataires du message, et
- l'émission du message par le dispositif de commutation sur chacun des bus connectés aux terminaux destinataires.

De cette manière, chaque terminal dispose entièrement du débit maximum offert par chaque bus. Par ailleurs, la technologie actuelle des commutateurs permet d'obtenir couramment une puissance de commutation de l'ordre de 1 Gbits/s. L'utilisation du dispositif de commutation ne réduit donc pas le débit de transmission disponible au niveau de chaque terminal, dans le cas où les bus sont de type ARINC 629.

En outre, ce procédé permet d'utiliser les terminaux existants équipés de circuits de couplage pour bus ARINC 629, sans qu'il soit nécessaire de leur apporter des modifications du point de vue matériel. Les seules modifications à effectuer sont purement logicielles et ont pour but de réorganiser les messages de manière à ce qu'ils aient une taille fixe.

Ce procédé présente également l'avantage d'être facilement évolutif. En effet, le format des messages est indépendant de la structure matérielle des bus et des protocoles de communication mis en oeuvre.

Selon une particularité de l'invention, chaque terminal susceptible d'émettre et de recevoir des messages est connecté au dispositif de commutation par deux bus, l'un étant utilisé en émission et l'autre en réception.

Ainsi, chaque terminal dispose du débit maximum du bus à la fois en émission et en réception.

Selon une autre particularité de l'invention, chaque terminal est connecté par deux bus respectifs à deux dispositifs de commutation redondants, chaque message émis par un terminal étant transmis aux deux dispositifs de commutation.

on peut ainsi assurer la détection des pannes au niveau des dispositifs de commutation.

Un tel dispositif de commutation peut être réalisé sur le modèle des commutateurs utilisés par la technique ATM, le couplage avec les bus étant réalisés à l'aide de circuits d'interface spécifiques du type de bus employé.

Un mode de réalisation du dispositif mettant en oeuvre le procédé selon l'invention sera décrit ci-après, à titre d'exemple non limitatif, avec référence aux dessins annexés dans lesquels :
Les figures 1 à 3 illustrent schématiquement trois architectures de réseaux d'interconnexion d'une pluralité de terminaux selon l'invention ;
La figure 4 montre le format des messages échangés ; et
La figure 5 illustre le processus de transmission d'un message entre deux terminaux ; et
La figure 6 représente schématiquement une matrice de commutation utilisée par le dispositif de commutation pour orienter les messages reçus.

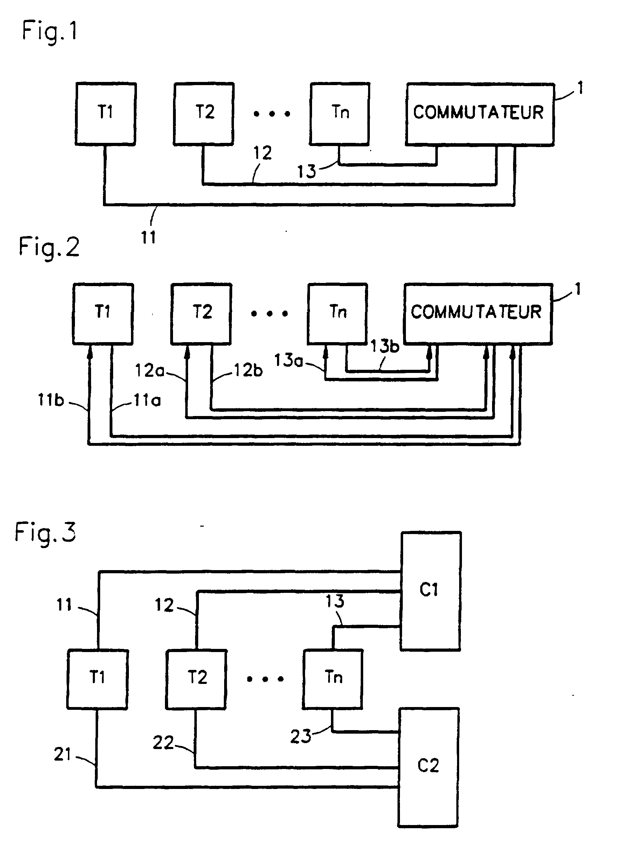

La figure 1 montre une pluralité de terminaux T1, T2, ...Tn reliés chacun par un bus 11,12,13 respectif à un dispositif de commutation 1. Les terminaux représentent, par exemple, les différents calculateurs et équipements électroniques embarqués à bord d'un aérodyne.
Les bus 11,12,13 sont de type multi-émetteur, multi-récepteur, multiplexé, par exemple de type ARINC 629, et sont raccordés simplement à deux émetteurs/récepteurs, à savoir, un terminal T1,T2,Tn et le dispositif de commutation 1.

Ainsi, dans le cas d'un bus ARINC 629, chaque terminal dispose d'un débit de 2 Mbits/s pour communiquer avec les autres.

Si l'on souhaite augmenter ce débit, on peut doubler chaque bus, comme représenté sur la figure 2, de manière à ce que chaque terminal T1,T2,Tn soit connecté au dispositif de commutation 1, par l'intermédiaire d'un bus 11a,12a,13a affecté à l'émission de messages, et d'un bus 11b,12b,13b à la réception.

Bien entendu, si un terminal T1,T2,Tn a besoin d'un débit supérieur, il est possible de lui affecter davantage de bus ARINC 629.

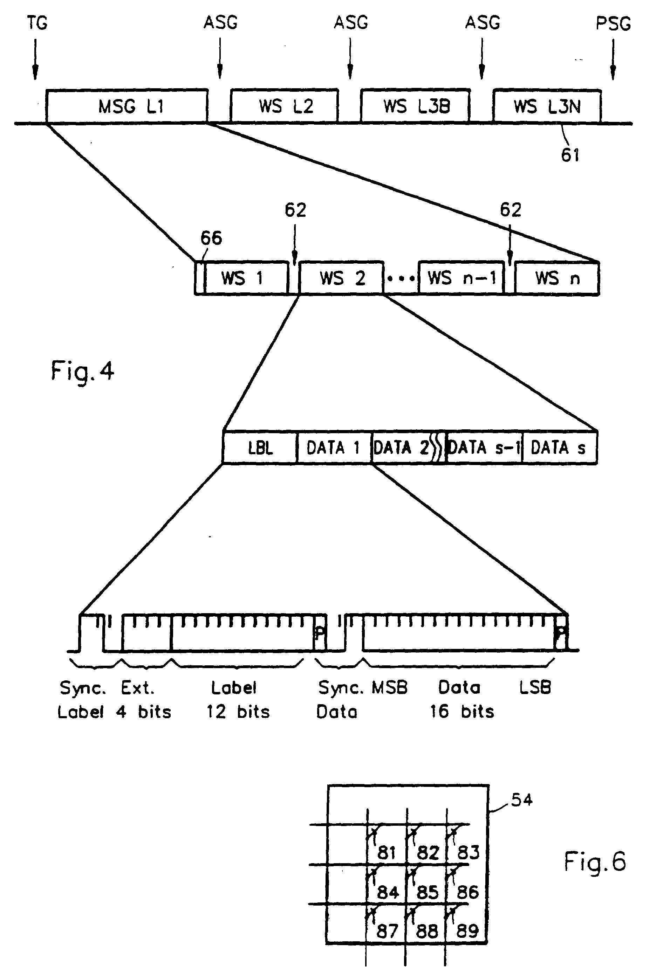

Il apparaît clairement sur les figures 1 et 2 que le dispositif de commutation 1 est le point faible de cette architecture. Pour supprimer cet inconvénient, il est possible, comme montré sur la figure 3, d'utiliser deux dispositifs de commutation redondants C1 et C2, chacun étant raccordé par un bus respectif 11 à 13 et 21 à 23, à chacun des terminaux T1,T2,Tn. Chaque terminal doit alors effectuer une comparaison des messages reçus par les deux bus connectés respectivement aux deux dispositifs de commutation C1,C2, une différence entre ces messages révélant un défaut de transmission.

L'architecture montrée sur la figure 1 ou 2 peut également être triplée, en utilisant trois dispositifs de commutation pour pouvoir assurer les communications entre les terminaux, même en cas de panne d'un des dispositifs de commutation.

La figure 4 illustre le principe de construction des messages selon la norme ARINC 629. Ces messages sont regroupés en trames périodiques de durée TI constante prédéfinie, comprenant un message L1 périodique de taille variable prédéfinie, par terminal connecté au bus considéré, complété ou non par un à trois messages L2, L3B et L3N, en fonction de l'espace restant non occupé par le message L1 dans la trame 61. Les messages L2, L3B et L3N ne sont donc pas émis périodiquement.
Les messages L2, L3B et L3N sont séparés par un intervalle de temps ASG indiquant la fin d'un message et le début du suivant, les trames 61 étant repérées grâce à l'intervalle de temps PSG.

Chaque message L1 est constitué par une information de synchronisation 66, puis par une succession d'une à 31 chaînes de mots ou "wordstring" WS 1 à WS n, séparées par un intervalle 62. Les messages L2, L3B et L3N sont constitués par un seul "wordstring".

Chaque "wordstring" WSi est constitué par une succession de mots de 20 bits, comprenant un mot de label LBL donnant des indications sur l'émetteur du message et son contenu, suivi d'un à 256 mots de données DATA 1 à DATA s, le premier mot de données DATA 1 indiquant le nombre de mots de données du "wordstring" WSi. Un mot de label LBL comprend 3 bits de synchronisation, 4 bits d'extension permettant d'identifier l'émetteur du message, 12 bits d'identification du message et un bit de parité P. Les mots de données comprennent 3 bits de synchronisation, suivis de 16 bits de donnée et d'un bit de parité P.

Pour simplifier la commutation des messages, la taille des "wordstrings" WSi est fixée à une valeur prédéterminée pour tous les terminaux T1,T2,Tn. Ainsi chaque "wordstring" WSi est constitué par un label donnant des indications sur le contenu, l'émetteur et le destinataire du "wordstring", et un champ contenant un nombre fixe de mots de données à transmettre. Les "wordstrings" WSi deviennent ainsi comparables aux cellules utilisées par la technique ATM de transmission asynchrone de données numériques, le label du "wordstring" servant à diriger les données numériques associées vers les destinataires.

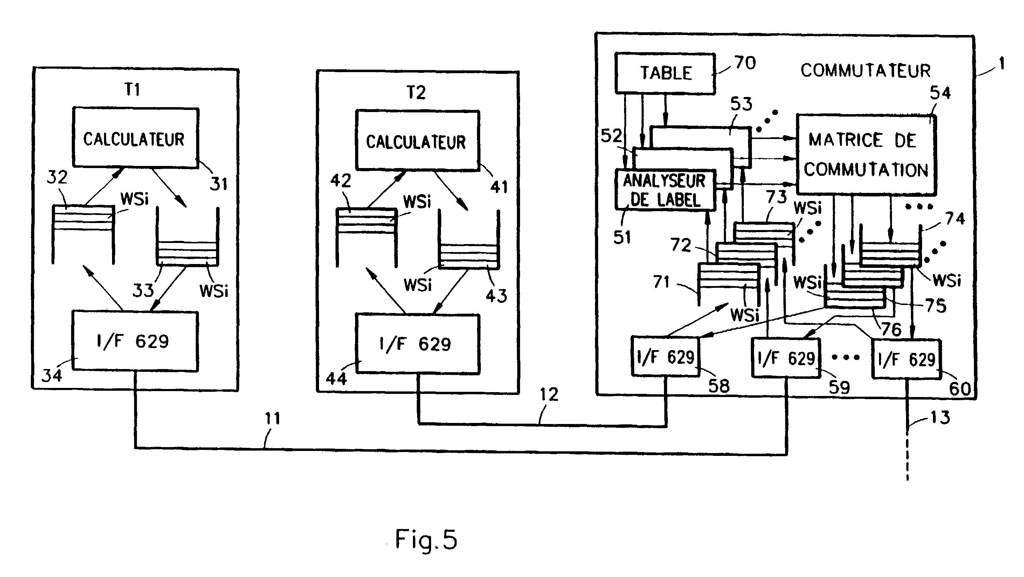

Tel que représenté sur la figure 5, chaque terminal T1, T2 comprend un calculateur 31,41, deux mémoires d'échange, par exemple de type FIFO, à savoir, une mémoire d'échange d'émission 32,42 et une mémoire d'échange de réception 33,43, dans lesquelles sont rangés respectivement les "wordstrings" ou messages WSi émis par le calculateur 31,41 et les messages reçus, destinés au calculateur.

Chaque terminal T1,T2 comprend également un circuit de couplage 34,44 connecté au bus 11,12 de type ARINC 629 associé au terminal, qui assure le transfert des messages WSi entre les mémoires d'échange 32,33,42,43 et le bus 11,12.

Ainsi, par exemple, chaque message WSi émis par le calculateur 31 est stocké dans la mémoire d'échange 33, puis transféré par le circuit de couplage 34 sur le bus 11 à destination du dispositif de commutation 1 conçu pour retransmettre les messages reçus vers leurs destinataires.

Pour cela, le circuit de commutation 1 comprend :
- un circuit de couplage 58,59,60 par bus 11,12,13 auquel le dispositif de commutation 1 est connecté,
- une mémoire d'échange de réception 71 de type FIFO, dans laquelle sont empilés les messages WSi circulant sur les bus 11,12,13 et transférés par les circuits de couplage 58,59,60,
- autant de mémoires d'échange d'émission 74,75,76 de type FIFO, que de bus auxquels le dispositif de commutation est connecté, et dans lesquelles sont empilés les messages WSi à retransmettre sur au moins l'un des bus 11,12,13,
- un dispositif d'analyse 51 de label conçu pour analyser successivement les labels LBL des messages WSi se trouvant dans la mémoire d'échange de réception 71 et leur adjoindre des informations de routage, et
- une matrice de commutation 54 qui reçoit les messages WSi transmis par le dispositif d'analyse de label 51 et qui exploite les informations de routage associées à chaque message WSi pour déterminer dans quelles mémoires d'échange d'émission 74,75,76 transférer le message.

Les messages WSi empilés dans les mémoires d'échange d'émission 74,75,76 sont ensuite transférés sur le bus correspondant 11,12,13 par le circuit de couplage 58,59,60 correspondant.

Ensuite, les messages WSi retransmis par le dispositif de couplage 1, circulant par exemple sur le bus 12 sont transférés par le circuit de couplage 44 dans la mémoire d'échange de réception 43, et sont ainsi mis à la disposition du calculateur 41.

Il est à noter que, selon la norme ARINC 629, chaque message émis par l'un des circuits de couplage 34,44,58,59,60 sur les bus 11,12,13, est simultanément reçu par ce même circuit qui effectue la comparaison du message reçu avec celui émis et émet un signal d'erreur dans le cas où une différence est détectée. Cette disposition permet de détecter les erreurs d'émission.

Les dispositifs d'analyse de label 51,52,53 peuvent, par exemple, être associés à une table 30 permettant d'établir la correspondance entre les labels de tous les messages WSi susceptibles d'être reçus par le dispositif de commutation 1, et des informations de routage exploitables par la matrice de commutation 54.
Cette table de correspondance 30 est mémorisée dans une mémoire non volatile, par exemple de type EEPROM, et est associée à des moyens de téléchargement qui permettent de charger la table, lors de l'initialisation du dispositif de commutation 1, ou bien lors d'une modification de la liste des messages échangés par les terminaux T1,T2, Tn.

Afin d'offrir une plus grande rapidité de commutation, le dispositif de couplage 1 comprend autant de mémoires d'échange de réception 71,72,73 et autant de dispositifs d'analyse de label 51,52,53, que de bus 11,12,13, chaque mémoire d'échange de réception 71,72,73 étant connectée d'un côté à un circuit de couplage 58,59,60 respectif, et de l'autre à un dispositif d'analyse de label 51,52,53 respectif. Par ailleurs, la matrice de commutation 54 comprend autant d'entrées que de dispositifs d'analyse de label 51,52,53. De cette manière, les messages WSi émis vers le dispositif de commutation 1 par les différents bus 11,12,13 peuvent être traités en parallèle.

La matrice de commutation 54 peut être réalisée selon la technique des commutateurs utilisés dans le domaine des télécommunications, par exemple comme celle représentée schématiquement sur la figure 6.

Sur cette figure, la matrice de commutation 54 comprend trois entrées et trois sorties, chacune de ces entrées étant interconnectée avec chacune des trois sorties, au moyen de trois interrupteurs 81 à 89 commandés de manière indépendante les uns des autres par les informations de routage associées à chaque message WSi à transférer.

## Revendications

1. Procédé de transfert de données numériques entre une pluralité de terminaux émettant et/ou recevant des trames ARINC 629
caractérisé en ce qu'il comprend la connexion de chaque terminal (T1,T2,Tn) à un dispositif de commutation (1) du type de ceux utilisés pour commuter des liaisons ATM par un bus (11,12,13) respectif de type multi-émetteur, multi-récepteur, multiplexé, chaque bus (11,12,13) étant relié à un seul terminal (T1,T2,Tn) et au dispositif de commutation (1) qui assure sélectivement la communication entre lesdits bus (11,12,13), ledit procédé comprenant en outre, lors de l'émission de données numériques par un terminal (T1,T2,Tn) vers au moins un terminal destinataire (T1,T2,Tn) :
- la conformation des données numériques en au moins un message (WSi) de longueur fixe prédéfinie, dans lequel les données numériques sont associées à un en-tête comprenant un code d'identification (LBL) du message,
- l'émission dudit message (WSi) par le terminal (T1, T2, Tn) sur le bus (11, 12, 13) le reliant au dispositif de commutation (1),
- la réception du message (WSi) par le dispositif de commutation (1), la lecture du code d'identification (LBL) du message (WSi), et la détermination, à l'aide du code d'identification (LBL), des terminaux (Tl,T2,Tn) destinataires du message, et
- l'émission du message (WSi) par le dispositif de commutation (1) sur chacun des bus (11,12,13) connectés aux terminaux (T1, T2, Tn) destinataires.

2. Procédé selon la revendication 1,
caractérisé en ce que chaque terminal (T1, T2, Tn) susceptible d'émettre et de recevoir des messages est connecté au dispositif de commutation (1) par deux bus (11a,11b, 12a,12b, 13a,13b), l'un étant utilisé exclusivement en émission et l'autre exclusivement en réception.

3. Procédé selon la revendication 1 ou 2,
caractérisé en ce que chaque terminal (T1,T2,Tn) est connecté par deux bus respectifs (11,21, 12,22, 13,23) à deux dispositifs de commutation (C1,C2) redondants, chaque message émis par un terminal (T1,T2,Tn) étant transmis aux deux dispositifs de commutation (C1,C2), et chaque message reçu par un terminal provenant des deux dispositifs de commutation (C1,C2).

4. Procédé selon l'une des revendications précédentes,
caractérisé en ce que lesdits bus sont compatibles avec la norme ARINC 629.

5. Dispositif pour le transfert de données numériques entre une pluralité de terminaux émettant et/ou recevant des trames ARINC 629
caractérisé en ce qu'il comprend un dispositif de commutation (1) du type de ceux utilisés pour commuter des liaisons ATM et une pluralité de bus (11,12,13) de type multi-émetteur, multi-récepteur, multiplexé connectés chacun à l'un desdits terminaux (T1,T2,Tn) et au dispositif de commutation (1), le dispositif de commutation (1) comprenant :
- un circuit de couplage (58,59,60) par bus (11,12,13) conçu pour effectuer les transferts de message (WSi) entre le bus (11,12,13) et le dispositif de commutation (1),
- au moins une mémoire d'échange de réception (71) dans laquelle sont transférés par les circuits de couplage (58,59,60) tous les messages (WSi) circulant sur lesdits bus (11,12,13),
- au moins un dispositif d'analyse de label (51) conçu pour lire successivement chaque message (WSi) se trouvant dans la mémoire d'échange de réception (71), et lui adjoindre des informations de routage en fonction du code d'identification (LBL) lu dans le message (WSi),
- autant de mémoires d'échange d'émission (74,75,76) que de bus (11,12,13), dans lesquelles sont stockés les messages (WSi) à transférer sur les bus (11,12,13) par les circuits de couplage (58,59,60),
- une matrice de commutation (54) conçue pour transférer chaque message (WSi) dans au moins une mémoire d'échange d'émission (74,75,76) en fonction des informations de routage associées au message (WSi).

6. Dispositif selon la revendication 5,
caractérisé en ce que le dispositif de commutation (1) comprend autant de mémoires d'échange de réception (71,72,73) et de dispositifs d'analyse de label (51,52,53) que de bus (11,12,13), chaque mémoire d'échange de réception (71,72,73) étant connectée à un bus (11,12,13) respectif par l'intermédiaire d'un circuit de couplage (58,59,60), et à un dispositif d'analyse de label (51,52,53) respectif, chaque dispositif d'analyse de label (51,52,53) étant connecté à une entrée respective de la matrice de commutation (54) et ayant accès à la table (70) donnant les informations de routage en fonction de chaque code d'identification (LBL) de message.

7. Dispositif selon la revendication 5 ou 6,
caractérisé en ce que le dispositif d'analyse de label (51,52,53) utilise une table (70) établissant la correspondance entre les codes d'identification de tous les messages (WSi) susceptibles d'être reçus par le dispositif de commutation (1) et des informations de routage exploitables par la matrice de commutation (54).

8. Dispositif selon l'une des revendications 5 à 7,
caractérisé en ce que chaque message (WSi) émis par l'un quelconque des circuits de couplage (58,59,60) est simultanément reçu par ce même circuit qui compare le message émis avec le message reçu, et émet un signal d'erreur dans le cas où la comparaison fait apparaître une différence.

9. Dispositif selon l'une des revendications 5 à 8,
caractérisé en ce que les mémoires d'échange d'émission (74,75,76) et de réception (71,72,73) sont de type FIFO.

## Claims

1. Method for transferring digital data between a plurality of terminals transmitting and/or receiving ARINC 629 frames,
characterized in that it comprises the connection of each terminal (T1, T2, Tn) to a switching device (1) the type of which is used to commute the ATM links by a respective bus (11, 12, 13) of the multitransmitter, multireceiver, multiplexed type, each bus (11, 12, 13) being connected to a single terminal (T1, T2, Tn) and to the switching device (1) which selectively ensures the communication between said buses (11, 12, 13), said method further comprising, at the time of the transmission of digital data by a terminal (T1, T2, Tn) to at least one destination terminal (T1, T2, Tn) :
- the shaping of the digital data into at least one message (WSi) of predefined fixed length, in which the digital data are associated with a header comprising a code (LBL) identifying the message,
- the transmission of said message (WSi) by the terminal (T1, T2; Tn) onto the bus (11, 12, 13) connecting it to the switching device (1),
- the reception of the message (WSi) by the switching device (1), the reading of the message (WSi) identification code (LBL), and the determination, by means of the identification code (LBL), of the terminals (T1, T2, Tn) to which the message is addressed, and
- the transmission of the message (WSi) by the switching device (1) onto each of the buses (11, 12, 13) connected to the destination terminals (T1, T2, Tn).

2. The method according claim 1,
characterised in that each terminal (T1, T2, Tn) susceptible of transmitting and receiving messages is connected to the switching device (1) by two buses (11a, 11b, 12a, 12b, 13a, 13b), one being used exclusively for transmission and the other exclusively for reception.

3. The method according claim 1 or 2,
characterised in that each terminal (T1, T2, Tn) is connected by two respective buses (11, 21, 12, 22, 13, 23) to two redundant switching devices (C1, C2), each message transmitted by a terminal (T1, T2, Tn) being transmitted to the two switching devices (C1, C2), and each message received by a terminal coming from said two switching devices(C1, C2).

4. The method according one of the preceding claims,
characterised in that said buses are compatible with the ARINC 629 standard.

5. A device for transferring digital data between a plurality of terminals transmitting and/or receiving ARINC 629 frames,
characterised in that it comprises a switching device (1) of type of which is used to commute the ATM links and a plurality of buses (11, 12, 13) of the multitransmitter, multireceiver, multiplexed type connected to each of said terminals (T1, T2, Tn) and to said switching device (1), said switching device (1) comprising:
- a circuit for coupling (58, 59, 60) by bus (11, 12, 13) designed to transfer the messages (WSi) between the bus (11, 12, 13) and said switching device (1),
- at least one reception exchange memory (71) into which are transferred, via the coupling circuits (58, 59, 60), all the messages (WSi) circulating on said buses (11, 12, 13),
- at least one label analyzing device (51) designed to successively read each message (WSi) situated in the reception exchange memory (71) and to attach thereto routing information as a function of the identification code (LBL) read in the message (WSi),
- as many transmission exchange memories (74, 75, 76) as there are buses (11, 12, 13), in which are stored the messages (WSi) to be transferred on said buses (11, 12, 13) by said coupling circuits (58, 59, 60),
- a switching matrix (54) designed to transfer each message (WSi) into at least one transmission exchange memory (74, 75, 76) as a function of the routing information associated with said message (WSi).

6. The device according Claim 5,
characterised in that the switching device (1) comprises as many reception exchange memories (71, 72, 73) and label analyzing devices (51, 52, 53) as there are buses (11, 12, 13), each reception exchange memory (71, 72, 73) being connected to one respective bus (11, 12, 13) via a coupling circuit (58, 59, 60), and to a respective label analyzing device (51, 52, 53), each label analyzing device (51, 52, 53) being connected to a respective input of the switching matrix (54) and having access to the table (70) indicating the routing information as a function of each message identification code (LBL).

7. The device according claim 5 or 6,
characterised in that the label analyzing device (51, 52, 53) uses a table (70) establishing the correspondence between the identification codes of all the messages (WSi) susceptible of being received by the switching device (1) and the routing information usable by the switching matrix (54).

8. The device according one of the claims 5 to 7,
characterised in that each message (WSi) transmitted by any one of the coupling circuits (58, 59, 60) is simultaneously received by this same circuit which compares the message transmitted with the message received, and emits an error signal in the event of the comparison revealing a difference.

9. The device according one of the preceding claim 5 to 8,
characterized in that the transmission (74, 75, 76) and reception (71, 72, 73) exchange memories are of the FIFO type.

## Patentansprüche

1. Verfahren für die Übertragung von digitalen Daten zwischen einer Mehrzahl von Terminals, die Frames nach dem Standard ARINC 629 senden und/oder empfangen,
dadurch gekennzeichnet, dass es den Anschluss jedes Terminals (T1, T2, Tn) an eine Umschaltvorrichtung des Typs beinhaltet, wie er für die Umschaltung von ATM-Verbindungen über einen jeweiligen Bus (11, 12, 13) vom Multisender-, Multiempfänger-Multiplextyp verwendet wird, der an einen einzigen Terminal (T1, T2, Tn) und an die Umschaltvorrichtung (1) angeschlossen ist, die selektiv die Kommunikation mit den genannten Bussen (11, 12, 13) gewährleistet, wobei das genannte Verfahren darüber hinaus anlässlich der Sendung von digitalen Daten anhand eines Terminals (T1, T2, Tn) an mindestens ein Empfängerterminal (T1, T2, Tn) folgendes beinhaltet:
- die Ausformung der digitalen Daten in Gestalt von mindestens einer Mitteilung (WSi) mit vorgegebener feststehender Länge, in der die digitalen Daten einem Kopfgeil zugeordnet sind, das einen Identifikationscode (LBL) der Mitteilung enthält,
- das Senden der genannten Mitteilung (WSi) durch das Terminal (T1, T2, Tn) an den Bus (11, 12, 13), der ihn mit der Umschaltvorrichtung (1) verbindet,
- den Empfang der Mitteilung (WSi) durch die Umschaltvorrichtung (1), das Lesen des Identifikationscodes (LBL) der Mitteilung und die Bestimmung der Empfängerterminals (T1, T2, Tn) der Mitteilung mithilfe des Identifikationscodes (LBL), und
- das Senden der Mitteilung (WSi) durch die Umschaltvorrichtung (1) an jeden der Busse (11, 12, 13), die an die Empfängerterminals (T1, T2, Tn) angeschlossen sind.

2. Verfahren gemäß Patentanspruch 1,
dadurch gekennzeichnet, dass jedes Terminal (T1, T2, Tn), das Mitteilungen senden und empfangen kann, anhand von zwei Bussen (11a,11b, 12a,12b, 13a,13b) an die Umschaltvorrichtung (1) angeschlossen ist, wobei einer ausschließlich für das Senden und der andere ausschließlich für das Empfangen verwendet wird.

3. Verfahren gemäß Patentanspruch 1 oder 2,
dadurch gekennzeichnet, dass jedes Terminal (T1, T2, Tn) jeweils anhand von zwei Bussen (11,21, 12,22, 13,23) an zwei redundante Umschaltvorrichtungen (C1, C2) angeschlossen ist, wobei jede von einem Terminal (T1, T2, Tn) gesendete Mitteilung an zwei Umschaltvorrichtungen (C1, C2) übermittelt wird, und jede von einem Terminal empfangene Mitteilung von zwei Umschaltvorrichtungen (C1, C2) stammt.

4. Verfahren gemäß einem der vorangegangenen Patentansprüche,
dadurch gekennzeichnet, dass die genannten Busse mit der Norm ARINC 629 kompatibel sind.

5. Vorrichtung für den Transfer von digitalen Daten zwischen einer Mehrzahl von Terminals, die Frames nach dem Standard ARINC 629 senden und/oder empfangen,
dadurch gekennzeichnet, dass sie eine Umschaltvorrichtung (1) des Typs beinhaltet, wie er für das Umschalten von ATM-Verbindungen verwendet wird, und eine Mehrzahl von Bussen (11, 12, 13) vom Typ Multisender, Multiempfänger, Multiplex, die jeweils an einen der genannten Terminals (T1, T2, Tn) und an die Umschaltvorrichtung (1) angeschlossen sind, wobei die Umschaltvorrichtung (1) folgendes beinhaltet:
- einen Koppelschaltkreis (58, 59, 60) mittels Bus (11, 12, 13), der so konzipiert ist, dass er die Transfers von Mitteilungen (WSi) zwischen dem Bus (11, 12, 13) und der Umschaltvorrichtung vornimmt,
- mindestens einen Eingangsspeicher (71), in den über die Koppelschaltkreise (58, 59, 60) alle Mitteilungen (WSi) transferiert werden, die über die genannten Busse (11, 12, 13) laufen,
- mindestens eine Label-Analysevorrichtung (51), die so konzipiert ist, dass sie nacheinander jede Mitteilung (WSi) liest, die sich im Eingangsspeicher (71) befindet und ihm Leitwegsinformationen hinzufügt, die sich nach dem Identifikationscode (LBL) richten, der in der Mitteilung (WSi) gelesen worden ist,
- ebenso viele Sendespeicher (74, 75, 76), wie Busse vorhanden sind, in denen die Mitteilungen (WSi) gespeichert werden, die von den Koppelschaltkreisen (58, 59, 60) an die Busse (11, 12, 13) weitergeleitet werden sollen,
- eine Umschaltmatrix (54), die so konzipiert ist, dass sie jede Mitteilung (WSi) in Abhängigkeit von den Leitwegsinformationen, die der Mitteilung (WSi) zugeordnet worden sind, in mindestens einen Sendespeicher (74, 75, 76) weiterleitet.

6. Vorrichtung gemäß Patentanspruch 5,
dadurch gekennzeichnet, dass die Umschaltvorrichtung (1) ebenso viele Empfangsspeicher (71, 72, 73) und Label-Analysevorrichtungen (51, 52, 53) besitzt, wie Busse (11, 12, 13) vorhanden sind, wobei jeder Empfangsspeicher (71, 72, 73) jeweils über einen Koppelschaltkreis (58, 59, 60) an einen Bus und jeweils an eine Label-Analysevorrichtung (51, 52, 53) angeschlossen ist, wobei jede Label-Analysevorrichtung (51, 52, 53) jeweils an einen Eingang der Umschaltmatrix (54) angeschlossen ist und Zugang zu der Tabelle (70) hat, die die Leitwegsinformationen in Abhängigkeit von jedem Identifikationscode (LBL) der Mitteilungen angibt.

7. Vorrichtung gemäß Patentanspruch 5 oder 6,
dadurch gekennzeichnet, dass die Label-Analysevorrichtung (51, 52, 53) eine Tabelle (70) verwendet, die eine Entsprechung zwischen den Identifikationscodes aller Mitteilungen (WSi), die von der Umschaltvorrichtung empfangen werden könnten, und den Leitwegsinformationen, die von der Umschaltmatrix (54) verwendet werden können, herstellt.

8. Vorrichtung gemäß einem der Patentansprüche 5 bis 7,
dadurch gekennzeichnet, dass jede Mitteilung (WSi), die von irgendeinem der Koppelschaltkreise (58, 59, 60) gesendet wird, gleichzeitig von demselben Schaltkreis empfangen wird, der die gesendete Mitteilung mit der empfangenen Mitteilung vergleicht und ein Fehlersignal sendet, wenn der Vergleich einen Unterschied ergibt.

9. Vorrichtung gemäß einem der Patentansprüche 5 bis 8,
dadurch gekennzeichnet, dass die Sendespeicher (74, 75, 76) und Empfangsspeicher (71, 72, 73) vom Typ FIFO sind.
